# EUROPÄISCHE PATENTSCHRIFT

(11) **EP 1 311 588 B1**
(45) Veröffentlichungstag und Bekanntmachung des Hinweises auf die Patenterteilung: **15.11.2006**
(21) Anmeldenummer: 01965218.9
(22) Anmeldetag: 27.08.2001
(51) Int. Cl.: C08G 73/14, C08L 79/08, C09D 179/08, C09D 5/25

(54) **POLYAMIDIMIDHARZLÖSUNG UND IHRE VERWENDUNG ZUR HERSTELLUNG VON DRAHTLACKEN**
POLYAMIDE-IMIDE RESIN SOLUTION AND THE USE THEREOF FOR PRODUCING WIRE ENAMELS
SOLUTION DE RESINE DE POLYAMIDIMIDE ET SON UTILISATION POUR LA PRODUCTION DE VERNIS POUR FILS DE FER

(30) Priorität: 25.08.2000 DE 10041943
(43) Veröffentlichungstag der Anmeldung: 21.05.2003
(73) Patentinhaber: Altana Electrical Insulation GmbH, 46483 Wesel (DE)
(72) Erfinder: TÖDTER-KÖNIG, Sascha, 22763 Hamburg (DE); LIENERT, Klaus-Wilhelm, 22763 Hamburg (DE); SCHMIDT, Gerold, 22145 Hamburg (DE)
(74) Vertreter: Fitzner, Uwe
(86) Internationale Anmeldenummer: PCT/EP2001/009841
(87) Internationale Veröffentlichungsnummer: WO 2002/016476

(56) Entgegenhaltungen:
- DE-A- 2 947 117

## Beschreibung

Die vorliegende Erfindung betrifft eine neue Polyamidimidharzlösung und ihre Verwendung zur Herstellung von neuen Drahtlacken. Außerdem betrifft die vorliegende Erfindung ein neues Verfahren zur Herstellung der Polyamidimidharzlösung und der Drahtlacke. Ferner betrifft die Erfindung die mit den neuen Drahtlacken beschichteten Drähte.

Die Verwendung von Polyamidimiden in Drahtlacken ist bekannt und beispielsweise in US-A-3 554 984, DE-A-24 41 020, DE-A-25 56 523, DE-A-12 66 427 und DE-A-19 56 512 beschrieben. Die Polyamidimide werden aus Polycarbonsäuren oder deren Anhydriden, bei denen zwei Carboxylgruppen in vicinaler Stellung stehen und die mindestens noch eine weitere funktionelle Gruppe besitzen müssen, und aus Polyaminen mit wenigstens einer primären, zur lmidbildung fähigen Aminogruppe hergestellt. Statt der Aminogruppe kann eine Isocyanatgruppe zur Bildung des Imidringes verwendet werden. Die Polyamidimide können auch durch Umsetzung von Polyamiden, Polyisocyanaten, die mindestens zwei NCO-Gruppen enthalten, und cyclischen Dicarbonsäureanhydriden, die mindestens eine weitere kondensations- oder additionsfähige Gruppe enthalten, gewonnen werden.

Weiterhin ist es auch möglich, die Polyamidimide aus Diisocyanaten oder Diaminen und Dicarbonsäuren herzustellen, wenn eine der Komponenten bereits eine Imidgruppe enthält. So kann insbesondere zuerst ein Tricarbonsäureanhydrid mit einem diprimären Diamin zu der entsprechenden Diimidocarbonsäure umgesetzt werden, die dann mit einem Diisocyanat zu dem Polyamidimid reagiert.

Bei den heute auf dem Markt angebotenen Produkten handelt es sich um polyamidimidische Drahtlacke, die aus rein aromatischen Bindemitteln bestehen, z.B. aus dem Reaktionsprodukt von Trimellithsäureanhydrid mit 4,4'-Diphenylmethandiisocyanat, und die in N-Methylpyrrolidon (NMP), z.T. verschnitten mit einem Kohlenwasserstoff, gelöst sind. NMP ist ein teures Lösemittel. Außerdem spricht es schlecht auf Additive an, die z.B. für die Verbesserung des Verlaufs von Drahtlacken eingesetzt werden. NMP ist auch für den hohen NOx-Ausstoß der Lackieranlagen, die nach dem Stand der Technik mit einer Abluftverbrennung ausgestattet sind, verantwortlich.

Ein optimales Lösemittel, das die oben genannten Nachteile des NMPs nicht aufweist, ist Kresol. Es hat sich jedoch herausgestellt, daß die NMPlöslichen Polyamidimide in Kresol nicht herstellbar oder löslich sind. Es hat zwar viele Versuche gegeben diese Probleme zu lösen, doch konnte bis heute kein befriedigendes Ergebnis erzielt werden.

So zum Beispiel ist aus der DE 2 031 072 bekannt, daß bei der Mischung von zwei Lösungen, die jeweils 160°C haben, wobei die eine Lösung die von Trimellithsäureanhydrid in Kresol ist und die andere die von 4,4'-Diaminodiphenylmethan in Kresol, durch eine Kondensation bei über 190°C ein kresollösliches Polyamidimid erhalten wird. Es werden keine Angaben zur Flexibilität der Filme nach der Härtung gemacht. Außerdem ist das Verfahren der Mischung von zwei heißen Lösungen nicht besonders praxisfreundlich.

In der JP 7324 597 wird die Herstellung von stark imidhaltigen und kresollöslichen Polyamidimiden durch die Reaktion von Trimellithsäureanhydrid und Benzophenontetracarbonsäuredianhydrid mit 4,4'-Diphenylmethandiisocyanat in Kresol bei 200°C beschrieben. Die damit beschichteten Drähte haben eine gute Filmhärte und einen Wärmedruck von über 360°C. Der Einsatz von Benzophenontetracarbonsäuredianhydrid ist in N-Methylpyrrolidonhaltigen Polyamidimiden nicht Standard.

In der JP 7852 544 wird die Umsetzung von Trimellithsäureanhydrid mit Kresol zum Kresylester und dessen Reaktion mit 4,4'-Diaminodiphenylmethan zu einem kresollöslichen Polyamidimid beschrieben. Der damit hergestellte Kupferlackdraht soll Standardeigenschaften haben. Die Lagerstabilität des kresolhaltigen Lackes deutet auf einen, nicht angegebenen Estergehalt, des Harzes hin.

In der JP 7899 299 wird ebenfalls die Umsetzung von Trimellithsäureanhydrid mit Kresol zum Kresylester beschrieben. Dieser wird zu erst mit 4,4'-Diphenylmethandiisocyanat und dann mit 4,4'-Diaminodiphenylmethan zu einem kresollöslichen Polyamidimid umgesetzt. Der damit hergestellte Kupferlackdraht soll Standardeigenschaften haben. Es werden ebenfalls keine Angaben zum Estergehalt des Harzes gemacht.

In den DE 30 34 536, DE 29 47 117 und EP 0 291 699 wird z.B. das Polyamidimid durch Modifikation mit epsilon-Caprolactam kresollöslich gemacht. Dieses Polyamidimid ist nicht mehr rein aromatisch. Es ist bekannt, daß die aliphatische Kette im epsilon Caprolactam den tg delta und den Wärmedruck der ausgehärteten Drahtlacke negativ beeinflußt.

In der JP 48/32920 wird die Mitverwendung von 1,2,3,4-Butantetracarbonsäure beschrieben. Dadurch wird das Bindemittel in einem Gemisch aus NMP mit Kresol löslich. Das Butanderivat bringt indes aliphatische Strukturen in das Molekül, die den Eigenschaften der ausgehärteten Drahtlacke schaden, und damit unerwünscht sind.

Die DE 32 41 345 beschreibt die Verwendung von Zitronensäure im Aufbau der Polyamidimide, die JP 73/117268 die der Azelainsäure. Das oben gesagte gilt auch hier.

Die vorliegenden Erfindung hat sich demgemäß die Aufgabe gestellt, eine neue Polyamidimidharzlösung und neue Drahtlacke zur Verfügung zu stellen, die die genannten Nachteile nicht mehr aufweisen, sondern ein Eigenschaftsprofil zeigen, das dem Eigenschaftsprofil der Lösungen von rein aromatischen Polyamidimidharzen in NMP und der entsprechenden Drahtlacken gleicht oder es gar übertrifft und insbesondere eine verbesserte Lagerstabilität aufweist.

Diese Aufgabe wird durch die neue Polyamidimidharzlösung gelöst, welche durch Umsetzung von
(a) aromatischen Polycarbonsäuren und/oder deren Anhydriden mit
b1) aromatischen, bei der Herstellung von 4,4'-Diphenylmethandiisocyanat anfallenden Polyisocyanaten, enthaltend ein Gemisch aus 4,4'-Diphenylmethandiisocyanat, dessen Isomeren und Homologen, mit einer rechnerischen NCO-Funktionalität von ca. 2,1 bis 2,7 pro Molekül
   allein oder
   im Gemisch mit
b3) Verbindungen der allgemeinen Formel

   A'-(NCO)₂ (VIII),

   wobei A' = eine Gruppe der allgemeinen Formeln IX bis XIII 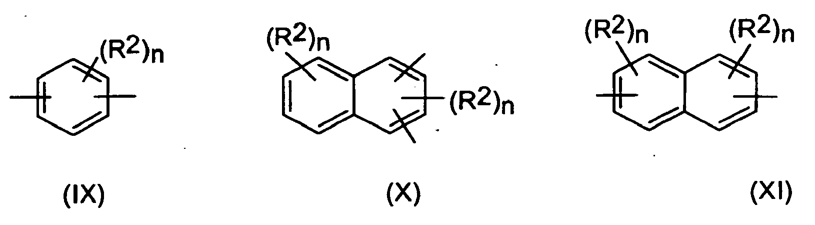 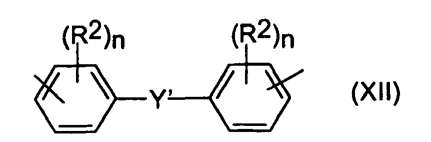 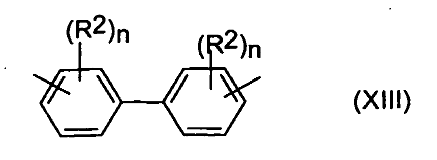 worin Y' die vorstehend angegebene Bedeutung von Y hat und außerdem 1,3,4-Thiadiazol-2,5-diyl bedeutet,
   R² = C₁ - bis C₄ -Alkyl oder Phenyl und
   n = 0 oder eine ganze Zahl von 1 bis 4
in Kresol durch Reaktion bei Temperaturen über 170°C herstellbar ist.

Im Hinblick auf den Stand der Technik war es nicht zu erwarten, daß die erfindungsgemäße Maßnahme, die aromatischen Reaktanden (a) und (b) in Kresol zu erhitzen, zu dem erwünschten Erfolg führen würde. Ganz im Gegenteil, traf doch die Fachwelt einen erheblichen Aufwand, aliphatische Komponenten zu finden, oder Verfahren zu entwickeln, welche eine Kresollöslichkeit sicherstellten, und nahm die hiermit verbundenen Nachteile in Kauf, weil das Problem anderweitig nicht lösbar schien.

Erfindungsgemäß werden für die Herstellung der neuen Polyamidimidharzlösung aromatische Polycarbonsäuren und/oder deren Anhydride (a) verwendet. Bevorzugt werden aromatische Tricarbonsäuren (a1) der allgemeinen Formel I und/oder deren Anhydride (a1) der allgemeinen Formel II.

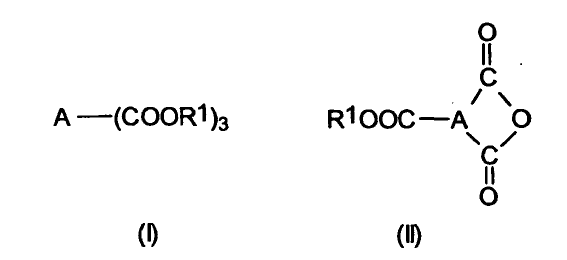

In den allgemeinen Formeln I und II bedeutet R1 ein Wasserstoffatom.

A bezeichnet eine Gruppe der allgemeinen Formeln III bis VI.

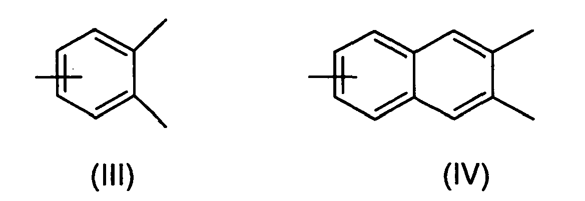

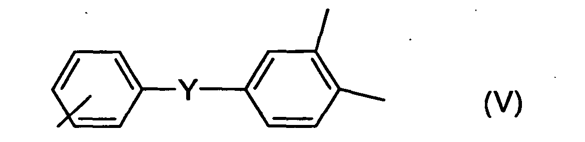

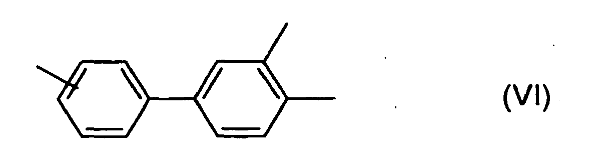

In der allgemeinen Formel V bedeutet Y eine Methylen-, Carbonyl-, Sulfon-, Dimethylmethylen-, Sauerstoff- oder Sulfidbrücke. Erfindungsgemäß sind Gruppen der allgemeinen Formeln III, IV, V, worin Y = Methylenbrücke, und VI, insbesondere aber III, bevorzugt. Beispiele erfindungsgemäß gut geeigneter Komponenten (a1) sind demnach Trimellithsäure und ihr Anhydrid, Naphthalintricarbonsäure und ihr Anhydrid, Diphenyltricarbonsäure und ihr Anhydrid. Ganz besonders bevorzugt wird Trimellithsäureanhydrid eingesetzt. Die Komponenten (a1) können einzeln oder als Gemische verwendet werden.

Anstelle der Komponenten (a1) können ihre Gemische (a2) mit aromatischen Tetracarbonsäuren (a21) und/oder deren Anhydriden (a21) verwendet werden. Beispiele geeigneter Komponenten (a21) sind Benzophenontetracarbonsäure und ihr Anhydrid oder Pyromellithsäure und ihr Anhydrid.

Des Weiteren können anstelle der Komponenten (a1) oder der Gemische (a2) Gemische (a3) verwendet werden, die neben der Komponente (a1) sowie gegebenenfalls den Komponenten (a21) noch sonstige aromatische Dicarbonsäuren (a31) enthalten. Ein Beispiel für eine gut geeignete aromatische Dicarbonsäure (a31) ist die Terephthalsäure.

Die weiteren wesentlichen Ausgangsverbindungen für die Herstellung der erfindungsgemäßen Polyamidimidlösung sind die aromatischen Polyisocyanate (b) mit einer Funktionalität größer als 2. Vorzugsweise werden solche mit einer Funktionalität von 2,1 - 3, höchst bevorzugt 2,1 bis 2,7, eingesetzt.

Die Polyisocyanate (b) können die erforderliche Funktionalität bereits bei ihrer Herstellung aufweisen. Die Funktionalität kann aber auch durch Vermischen mindestens eines Polyisocyanats mit mindestens einem weiteren aromatischen Polyisocyanat, insbesondere Diisocyanat, eingestellt oder variiert werden.

### Komponente b1

Bei der Herstellung von reinem 4,4'-Diphenylmethandüsocyanat fällt ein Polyisocyanat auf Basis von 4,4'-Diphenylmethandiisocyanat an, das neben diesem noch Isomere und Homologe enthält. Dieses Gemisch wird im folgenden Text mit Oligomerengemisch bezeichnet. Das isocyanathaltige Oligomerengemisch hat rechnerisch eine Funktionalität die höher ist als zwei NCO Gruppen pro Molekül. Bevorzugt für diese Erfindung sind Produkte die eine Funktionalität zwischen 2,1 und 2,7 pro Molekül haben. Liegt Sie höher, kann sie durch Zugabe von reinem 4,4'-Diphenylmethandüsocyanat eingestellt werden. Handelsübliche Produkte die aus diesem Oligomerengemisch bestehen sind z.B. Desmodur^{R} VL, Lupranat^{R} M20S, Isonate^{R} M305 und andere mehr. Erfindungsgemäß werden für die Herstellung der neuen Polyamidimidharzlösung von den Oligomerengemischen insbesondere Desmodur^{R} VL, allein oder in Abmischung mit reinem 4,4'-Diphenylmethandüsocyanat bevorzugt

### Komponente b3

Die Komponente b3 sind Verbindungen der allgemeinen Formel

A'-(NCO)₂ (VIII)

In der allgemeinen Formel VIII bedeutet A' eine Gruppe der allgemeinen Formeln IX bis XIII.

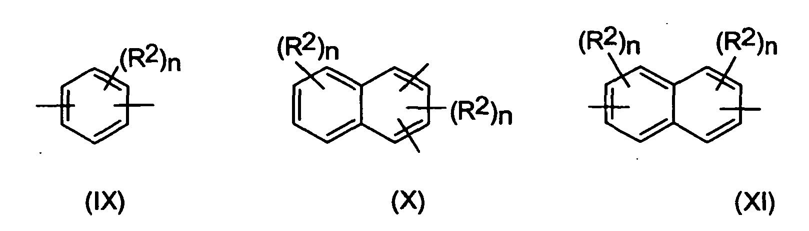

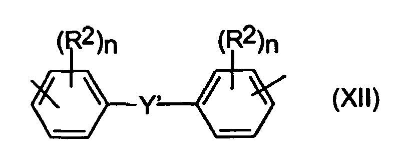

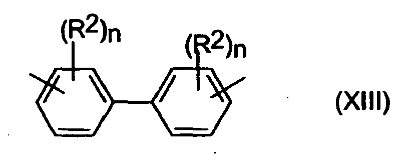

In der allgemeinen Formel XII hat Y' die vorstehend für Y angegebene Bedeutung und steht darüber hinaus noch für 1,3,4-Thiadiazol-2,5-diyl. In den allgemeinen Formeln IX bis XIII bedeutet R² einen C₁ bis C₄-Alkylrest, insbesondere Methyl, oder einen Phenylrest. Der Index n ist gleich 0 oder eine ganze Zahl von 1 bis 4.

Beispiele geeigneter aromatischer Diisocyanate sind z.B. Phenylen-, Toluylen-, Naphthalin- oder Xylylendüsocyanate oder Diphenylether-, Diphenylsulfid-, Diphenylsulphon- oder Diphenylmethandiisocyanate, insbesondere 4,4'-Diphenylmethandiisocyanat.

Die Komponente b1 kann als solche die Komponente (b) bilden. In einer weiteren Variante der Erfindung kann Komponente b3) im Gemisch mit Komponente b1) vorliegen.
D. h. als Komponente (b) können entweder
b1) aromatische bei der Herstellung von 4,4'-Diphenlymethandüsocyanat anfallende Polyisocyanate, bestehend aus einem Gemisch aus 4,4'-Diphenlymethandüsocyanat, dessen Isomeren und Homologen, mit einer rechnerischen NCO-Funktionalität von ca. 2,1 bis 2,7 pro Molekül allein
   oder
b1) im Gemisch mit
b3) aromatischen Diisocyanaten zum Einsatz kommen.

Erfindungsgemäß werden für die Herstellung der neuen Polyamidimidharzlösung die Mengen der vorstehend beschriebenen Komponenten (a) und (b) so gewählt, daß ihr Äquivalentverhältnis in etwa bei 1, bevorzugt bei 0,8 bis 1,2, besonders bevorzugt bei 0,9 bis 1,1 und insbesondere bei 1 liegt.

Das erfindungsgemäße Verfahren zur Herstellung der neuen Polyamidimidharze erfolgt dadurch, daß die Komponenten (a) und (b) in Kresol zur Reaktion gebracht werden. Die Reaktionstemperatur liegt erfindungsgemäß bei über 170°C. Vorzugsweise liegen die Temperaturen zwischen 175 und 230°C, insbesondere zwischen 180 und 210°C.

Im Falle der Umsetzung von Komponenten (a) mit aromatischen Diisocyanaten (b3) lässt sich der Reaktionsverlauf leicht anhand der entstehenden Kohlendioxidmenge verfolgen. Erfindungsgemäß wird ein Oligomerengemisch eingesetzt in Abmischung mit einem reinen Isocyanat oder ein Diisocyanat im Gemisch mit einem Polyisocyanat. Wird ein blockiertes Polyisocyanat verwendet so findet während der Reaktion die Abspaltung des Blockierungsmittels statt.

Nach Beendigung der Reaktion wird die neue Polyamidimidtiarzlösung durch Zugabe von weiterem Kresol und/oder sogenanntem Verschnittmittel auf die gewünschte Lackierviskosität eingestellt. Außerdem werden dem neuen Drahtlack im Allgemeinen noch übliche und bekannte Vemetzungskatalysatoren und/oder Additive zugegeben.

Vorzugsweise enthält der neue Drahtlack die neue Polyamidimidharzlösung und die übrigen Bestandteile in einer solchen Menge, daß folgende Zusammensetzung resultiert:
10 bis 50 , vorzugsweise 15 bis 45 Gew.%, Polyamidimid
0,1 bis 5,0, vorzugsweise 0,1 bis 4,0 Gew.-% Additive
0,0 bis 5,0, vorzugsweise 0,0 bis 3,0 Gew.-% Vemetzungskatalysatoren
10 bis 90, vorzugsweise 20 bis 80 Gew.-% Kresol
0 bis 40, vorzugsweise 5 bis 35 Gew.-% Verschnittmittel
wobei die Gew.-% jeweils auf den neuen Drahtlack bezogen sind und sich stets zu 100 Gew.-% addieren.

Vorteilhafterweise enthalten die Polyamidimide als Additive noch Phenolharze oder Melaminharze. Bewährt haben sich ebenfalls handelsübliche fluorierte Additive oder auch höher siedende Alkohole, wie z. B. Benzylalkohol.

Als Vemetzungskatalysatoren können die in der Drahtlacktechnologie üblichen Katalysatoren verwendet werden. Beispiele geeigneter Katalysatoren sind Zinkoktoat, Cadmiumoktoat, oder Titatanate, wie z.B. Tetrabutyltitanat.

Beispiele für geeignete Verschnittmittel sind Xylol, Solventnaphtha^{R}, Toluol, Ethylbenzol, Cumol, Schwerbenzol, verschiedene Solvesso^{R} und Shellsol-Typen sowie Deasol^{R}.

Überraschenderweise entspricht das Eigenschaftsbild der nach dem erfindungsgemäßen Verfahren hergestellten neuen Poylamidimidharzlösung dem der NMP-haltigen Poylamidimide. Die mit der neuen Poylamidimidharzlösung hergestellten neuen Drahtlacke sind lagerstabil. Sie haben eine gute Haftung auf Kupferdrähten und auf den üblich eingesetzten Grundlacken auf Polyester- oder Polyesterimidbasis. Sie haben einen hohen Wärmedruck und Wärmeschock.

Die nach dem erfindungsgemäßen Verfahren erhaltenen neuen Drahtlacke werden zur Beschichtung von Drähten eingesetzt. Vorzugsweise werden sie als Decklacke über Polyestergrundlacke auf Kupferdrähte appliziert und eingebrannt. Ebenso gehört aber auch die Verwendung als Einschichtlack (Single Coat) zu dem bevorzugten Einsatzbereich. Die vorliegende Erfindung betrifft demgemäß auch die diesbezügliche Verwendung der neuen Drahtlacke.

Ebenso sind Gegenstand der Erfindung Drähte, die mit dem neuen Drahtlack beschichtet sind. Überraschenderweise unterscheidet sich das Eigenschaftsniveau dieser Drähte nicht von Drähten, die mit NMP-haltigen Drahtlacken lackiert worden sind.

Die Erfindung wird anhand der nachfolgenden Beispiele näher erläutert.

### Beispiel 1:

### Herstellung der neuen Polyamidimidharzlösung 1 und des neuen Drahtlacks 1 in erfindungsgemäßer Verfahrensweise

537 g Trimellithsäureanhydrid, 1270 g Kresol und 750 g Desmodur^{R} VL werden in einem Dreihalskolben auf 80°C erwärmt. Nach der Exothermie wird langsam auf 190°C erwärmt. Nach Beendigung der CO₂ Bildung wird der Ansatz noch 2 Stunden bei 190°C gehalten. Danach wird die Polyamidimidharzlösung 1 abgekühlt. Es werden 1270 g Kresol, 760 g eines Gemische Kresol:Xylol 1:1 und 20 g Benzylalkohol zugegeben. Die Viskosität wird mit Kresol:Xylol 1:1 auf 780 mPas/23°C eingestellt. Der Festkörper beträgt 27.7 % (1g/1h/180°C).

### Beispiel 2:

### Herstellung der neuen Polyamidimidharzlösung 2 und des neuen Drahtlacks 2 in erfindungsgemäßer Verfahrensweise

404,6 g Trimellithsäureanhydrid, 400,0 g 4,4'-Diphenylmethandiisocyanat, 136,0 g Desmodur^{R} VL, 914,0 g Kresol und 9 g Imidazol werden in einem Dreihalskolben auf 150°C erhitzt, 1 Stunde gehalten und langsam auf 210°C erwärmt. Nach 3 Stunden bei 210°C wird die Polyamidimidharzlösung 2 mit 614,0 g Kresol und 765,0 g Solventnaphtha^{R} angelöst und abgekühlt. Danach werden 75 g Benzylalkohol, 600,0 g Kresol und 200,0 g Solventnaphtha^{R} zugegeben. Mit einem Kresol:Solventnaphtha-Gemisch 3:1 wird auf 1000 mPas/23°C eingestellt. Der Festkörper war 21,0% (1g/1h/180°C).

### Beispiel 3:

### Herstellung der neuen Polyamidimidharzlösung 3 und des neuen Drahtlacks 3 in erfindungsgemäßer Verfahrensweise

576,0 g Trimellithsäureanhydrid, 500,0 g 4,4'-Diphenylmethandiisocyanat, 268,0 g Desmodur^{R} VL, 1320,0 g Kresol und 6,0 g Imidazol werden in einem Dreihalskolben in Stufen auf 210°C erhitzt. Die resultierende Polyamidimidharzlösung 3 wird mit 1110,0 g Kresol und 810,0 g Solvesso^{R} 100 verdünnt. Es werden 53,8 g Benzylalkohol und 700,0 g einer Verdünnung Kresol: Solvesso^{R} 2:1 zugegeben. Der resultierende Drahtlack 3 wird mit dem Gemisch Kresol: Solvesso^{R} 2:1 auf eine Viskosität von 840 mPas bei 23°C und einen Festkörper von 23,4 % (1g/1h/180°C) eingestellt.

### Beispiel 4:

### Herstellung der neuen Polyamidimidharzlösung 4 und des neuen Drahtlacks 4 in erfindungsgemäßer Verfahrensweise

384,0 g Trimellithsäureanhydrid, 250,0 g 4,4'-Diphenylmethandiisocyanat, 268,0 g Desmodur^{R} VL, 900,0 g Kresol und 7,0 g Imidazol werden in einem Dreihalskolben langsam auf 210°C erhitzt. Der Kolbeninhalt wird bei dieser Temperatur 1 Stunde gehalten. Die resultierende Polyamidimidharzlösung 4 wird gekühlt, mit 790,0 g Kresol und 846,0 Solvesso^{R} 100 verdünnt. Nach der Zugabe von 28,0 g Benzylalkohol, 45,0 g Kresol und 15,0 g Solvesso^{R} 100 wird der resultierende Drahtlack 4 auf eine Viskosität von 980 mPas bei 23°C und einen Festkörper von 25,9 % (1 g/1 h/180°C) eingestellt.

### Vergleichsbeispiel 1:

### Herstellung einer herkömmlichen Polyamidimidharzlösung V1 und eines herkömmlichen Drahtlacks V1

Bei einer Temperatur von kleiner 30°C wurden 38.5 g Trimellithsäureanhydrid, 60.0 g 4,4'-Diphenylmethandiisocyanat und 73.5 g N-Methylpyrrolidon miteinander gemischt. Das Gemisch wird mit einer Rate von 10°C pro Stunde auf 150°C erhitzt. Bei dieser Temperatur wird der Ansatz so lange gehalten, bis kein Kohlendioxid mehr entsteht. Die resultierende Polyamidimidharzlösung V1 wird mit 93 g N-Methylpyrrolidon und 50.1 g Xylol verdünnt. Der resultierende Drahtlack V1 hat einen Festkörpergehalt von 30% bei einer Viskosität von 230 mPas bei 23°C.

### Vergleichsbeispiel 2:

### Versuch zur Herstellung einer herkömmlichen Polyamidimidharzlösung V2 und eines herkömmlichen Drahtlacks V2

537 g Trimellithsäureanhydrid, 1270 g Kresol und 700,0 g 4,4'-Diphenylmethandiisocyanat werden in einem Dreihalskolben auf 80°C erwärmt. Nach der Exothermie wird langsam auf 210°C erwärmt. Nach Beendigung der CO₂ Bildung wird der Ansatz noch 3 Stunden bei 210°C gehalten. Danach wird die Polyamidharzlösung abgekühlt. Der Lack ist nicht stabil. Es bildet nach kurzer Zeit ein Niederschlag.

### Anwendungsbeispiele 1 bis 4 und V1:

### Lackierung und anwendungstechnische Prüfung

Die Drahtlacke 1 bis 4 und V1 wurden mittels Drahtlackiermaschinen in üblicher und bekannter Weise appliziert und gehärtet. Dabei wurden sie wie üblich als Decklacke über einen Polyester- oder Polyesterimidgrundlack lackiert. Die jeweils erforderliche Lackfilmstärke wurde durch mehrere Einzelaufträge aufgebaut, wobei jeder einzelne Lackauftrag vor dem erneuten Lackauftrag blasenfrei ausgehärtet wurde. Die verwendeten üblichen Lackiermaschinen arbeiteten mit Abzugsgeschwindigkeiten von 5 bis zu 180 m/min, je nach Dicke des zu beschichtenden Drahtes. Bei der Härtung lagen die Ofentemperaturen wie üblich bei 520°C. Die Tabelle 1 gibt einen Überblick über die angewandten Lackierbedingungen.

**Tabelle 1**

| Lackierbedingungen: Zweischichtlackierungen mit Polyesterlack (PE) oder Polyesterimidlack (PEI) plus erfindungsgemäßem Drahtlack | |
|---|---|
| Ofen: | MAG AW/1A der Firma MAG, Graz, Österreich |
| Temperatur: | 520°C |
| Auftragssystem : | Düsen |
| Drahtdurchmesser : | 1,00 mm |
| Abzugsgeschwindigkeit : | 17 m/min |
| Zahl der Durchzüge : | |
| Grundlack | 8 |
| Decklack | 2 |
| Zunahmegrad : | 2 L |

Die lackierten Drähte werden nach IEC 851 (International Electronic Commission IEC Standard 851) geprüft. Die Tabelle 2 faßt die erhaltenen Versuchsergebnisse zusammen.

**Tabelle 2**

| Versuchsergebnisse nach IEC 851 | | | | | | | |
|---|---|---|---|---|---|---|---|
| Grundlack | PE | PE | PE | PE | PEI | PE | PEI |
| Decklack | 1 | 2 | 3 | 4 | 3 | V1 | V1 |
| Oberfläche | i.O. | i.O. | i.O. | i.O. | i.O. | i.O. | i.O. |
| Außenfaserdehnung 1*d+x % | 10 | 10 | 10 | 10 | 10 | 10 | 10 |
| Peel-Test (Umdrehungen) | 168 | 183 | 168 | 182 | 170 | 135 | 139 |
| Wärmeschock 2*d bei 240°C | i.O. | i.O. | i.O. | i.O. | | i.O. | |
| Wärmeschock 2*d bei 250°C | | | | | i.O. | | i.O. |
| Wärmedruck °C | 350 | 350 | 350 | 350 | 350 | 350 | 350 |
| tg Steilanstieg °C | 144 | 142 | 144 | 142 | 182 | 138 | 177 |

Die Ergebnisse untermauern, daß die erfindungsgemäßen Drahtlacke 1 bis 4 mindestens das Eigenschaftsprofil des Drahtlacks V1 aufweisen.

## Patentansprüche

1. Polyamidimidharzlösung, herstellbar durch Umsetzung von
(a) aromatischen Polycarbonsäuren und/oder deren Anhydriden mit
b1) aromatischen, bei der Herstellung von 4,4'-Diphenylmethandiisocyanat anfallenden Polyisocyanaten, enthaltend ein Gemisch aus 4,4'-Diphenylmethandiisocyanat, dessen Isomeren und Homologen, mit einer rechnerischen NCO-Funktionalität von ca. 2,1 bis 2,7 pro Molekül
allein oder
im Gemisch mit
b3) Verbindungen der allgemeinen Formel
A'-(NCO)₂ (VIII),
wobei A' = eine Gruppe der allgemeinen Formeln IX bis XIII 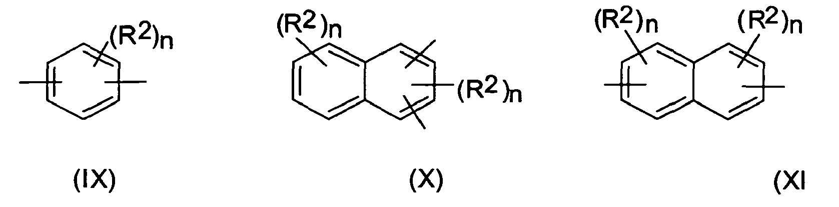 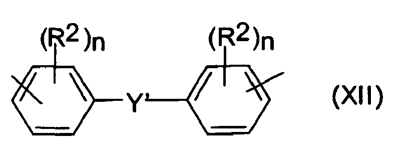 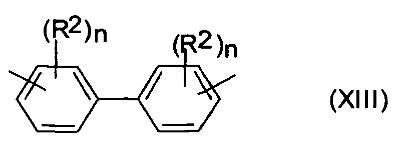 worin Y' die vorstehend angegebene Bedeutung von Y hat und außerdem 1,3,4-Thiadiazol-2,5-diyl bedeutet,
R² = C₁ - bis C₄ -Alkyl oder Phenyl und
n = 0 oder eine ganze Zahl von 1 bis 4
in Kresol durch Reaktion bei Temperaturen über 170°C.

2. Polyamidimidharzlösung nach Anspruch 1 **dadurch gekennzeichnet, daß** die Komponente (a)
a1) aromatische Tricarbonsäuren der allgemeinen Formel I und/oder deren Anhydride der allgemeinen Formel II 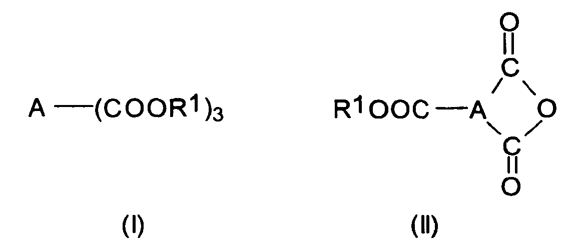 worin
R = H und
A = eine Gruppe der allgemeinen Formeln III bis VI 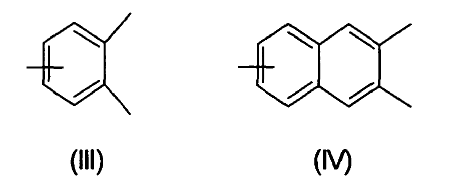 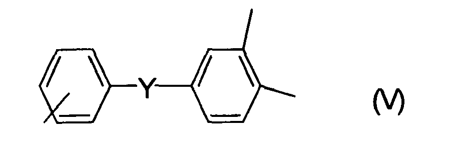 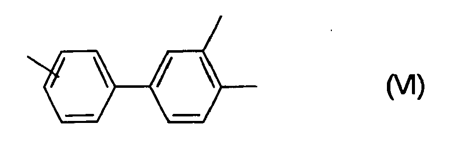 worin Y = -CH₂ -, -CO-, -SO₂-, -C(CH₃)₂-, -O- oder -S-; oder
a2) Gemische aus diesen Komponenten a1) einerseits und aromatischen Tetracarbonsäuren a21) und/oder deren Anhydriden a21) andererseits oder
a3) Gemische der Komponente a1), des Gemischs a2) mit aromatischen Dicarbonsäuren a31) andererseits enthält.

3. Polyamidimidharzlösung nach Anspruch 2, **dadurch gekennzeichnet, daß** die Komponente a1) Trimellithsäure und/oder ihr Anhydrid, die Komponente a21) Benzophenontetracarbonsäure, Pyromellithsäure und/oder ihre Anhydride, die Komponente a31) Terephthalsäure enthalten.

4. Polyamidimidharzlösung nach einem der Ansprüche 1 bis 3, **dadurch gekennzeichnet, daß** Komponente b) als Diisocyanate b3) Phenylen-, Toluylen-, Naphthalin- oder Xylylendiisocyanate oder Diphenylether-, Diphenylsulfid-, Diphenylsulphon- oder Diphenylmethandiisocyanate, insbesondere 4,4'-Diphenylmethandiisocyanat enthält.

5. Verwendung der Polyamidimidharzlösungen gemäß einem der Ansprüche 1 bis 4 für die Herstellung von Drahtlacken.

6. Drahtlack, enthaltend Polyamidimidharzlösungen gemäß einem der Ansprüche 1 bis 4.

7. Drahtlack nach Anspruch 6, enthaltend Additive und/oder Verschnittmittel.

8. Drahtlack nach Anspruch 6 oder 7, enthaltend die Polyamidimidharzlösungen in einer solchen Menge, daß, bezogen auf die Gesamtmenge des Drahtlacks, ein Polyamidimidgehalt von 10 bis 50, vorzugsweise 15 bis 45 Gew.-% resultiert.

9. Drahtlack nach Anspruch 8, enthaltend bezogen auf die Gesamtmenge des Drahtlacks,
10 bis 50, vorzugsweise 15 bis 45 Gew.-%, Polyamidimid
0,1 bis 5,0, vorzugsweise 0.1 bis 4,0 Gew.-% Additive
0,0 bis 5,0, vorzugsweise 0,0 bis 3,0 Gew.-% Vemetzungskatalysatoren
10 bis 90, vorzugsweise 20 bis 80 Gew.-% Kresol
0 bis 40, vorzugsweise 5 bis 35 Gew.-% Verschnittmittel.

10. Lackdraht **dadurch gekennzeichnet, daß** er mit einem Drahtlack gemäß einem der Ansprüche 6 bis 9 beschichtet ist.

11. Verfahren zur Herstellung eines Lackdrahts gemäß Anspruch 10,
**dadurch gekennzeichnet, daß**
- ein Grundlack vorzugsweise auf Polyester- oder Polyesterimidbasis auf einen Draht vorzugsweise aus Kupfer aufgetragen,
- der Drahtlack gemäß einem der Ansprüche 6 bis 10 appliziert und
- anschließend eingebrannt wird.

12. Verwendung des Drahtlacks gem. einem der Ansprüche 6 bis 9 zur Beschichtung von Drähten, vorzugsweise als Einschichtlack.

13. Verwendung des Drahtlacks gemäß einem der Ansprüche 6 bis 9 als Decklack zur Beschichtung von Drähten, vorzugsweise von mit Polyester- und Polyesterimidgrundlacken beschichteten Kupferdrähten.

## Claims

1. Polyamideimide resin solution preparable by reacting
(a) aromatic polycarboxylic acids and/or their anhydrides with
b1) aromatic polyisocyanates obtained in the preparation of 4,4'-diphenylmethane diisocyanate, comprising a mixture of 4,4'-diphenylmethane diisocyanate, its isomers and homologues, having an arithmetic NCO functionality of from about 2.1 to 2.7 per molecule
alone or in a mixture with
b3) compounds of the general formula
A'-(NCO)₂ (VIII),
where A' = a group of the general formulae IX to XIII 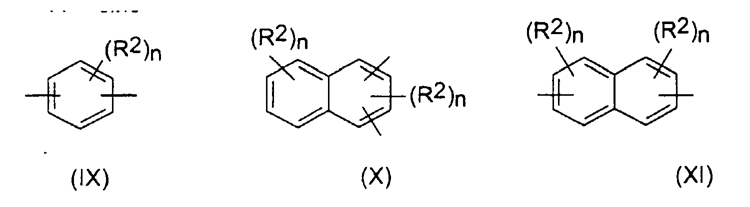 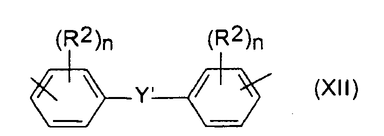 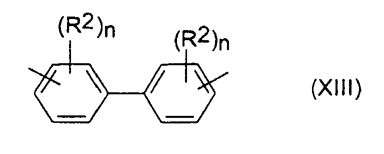 in which Y' has the above-indicated meaning of Y and additionally denotes 1,3,4-thiadiazole-2,5-diyl,
R² = C₁ to C₄ alkyl or phenyl and
n = 0 or an integer from 1 to 4,
in cresol by reaction at temperatures above 170°C.

2. Polyamideimide resin solution according to Claim 1, **characterized in that**
component (a) comprises
a1) aromatic tricarboxylic acids of the general formula I and/or their anhydrides of the general formula II 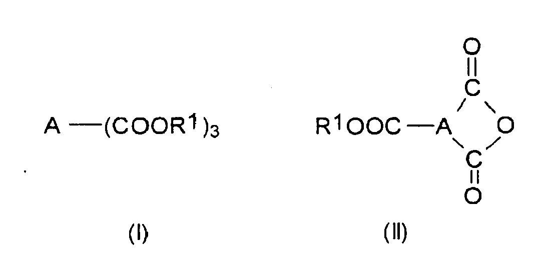 in which
R = H and
A = a group of the general formulae III to VI 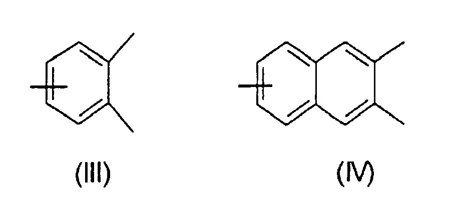 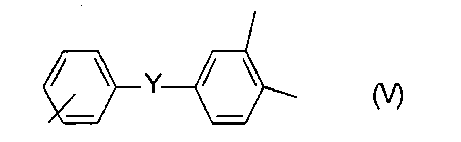 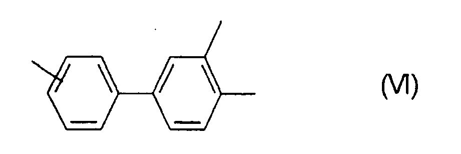 in which Y = -CH₂-, -CO-, -SO₂-, -C(CH₃)₂-, -O- or -S-; or
a2) mixtures of these components a1) on the one hand and aromatic tetracarboxylic acids a21) and/or their anhydrides a21) on the other hand or
a3) mixtures of the component a1), of the mixture a2) with aromatic dicarboxylic acids a31) on the other hand.

3. Polyamideimide resin solution according to Claim 2, **characterized in that** the component a1) comprises trimellitic acid and/or its anhydride, the component a21) comprises benzophenonetetracarboxylic acid, pyromellitic acid and/or their anhydrides, and the component a31) comprises terephthalic acid.

4. Polyamideimide resin solution according to one of Claims 1 to 3, **characterized in that** component b) comprises as diisocyanate b3) phenylene, tolylene, naphthalene or xylylene diisocyanates or diphenyl ether, diphenyl sulphide, diphenyl sulphone or diphenylmethane diisocyanates, especially 4,4'-diphenylmethane diisocyanate.

5. Use of the polyamideimide resin solutions according to one of Claims 1 to 4 for the preparation of wire enamel.

6. Wire enamel comprising polyamideimide resin solutions according to one of Claims 1 to 4.

7. Wire enamel according to Claim 6, comprising additives and/or extenders.

8. Wire enamel according to Claim 6 or 7, comprising the polyamideimide resin solutions in an amount such that, based on the total amount of the wire enamel, the resulting polyamideimide content is from 10 to 50% by weight, preferably from 15 to 45% by weight.

9. Wire enamel according to Claim 8, comprising, based on the total amount of the wire enamel,
from 10 to 50% by weight, preferably from 15 to 45% by weight of polyamideimide
from 0.1 to 5.0% by weight, preferably from 0.1 to 4.0% by weight, of additives
from 0.0 to 5.0% by weight, preferably from 0.0 to 3.0% by weight, of crosslinking catalysts
from 10 to 90% by weight, preferably from 20 to 80% by weight, of cresol
from 0 to 40% by weight, preferably from 5 to 35% by weight, of extenders.

10. Enamelled wire, **characterized in that** it is coated with a wire enamel according to one of Claims 6 to 9.

11. Process for producing an enamelled wire according to Claim 10, **characterized in that**
- a basecoat, preferably based on polyester or polyesterimide, is applied to a wire, preferably of copper,
- the wire enamel according to one of Claims 6 to 10 is applied and
- then baking is carried out.

12. Use of the wire enamel according to one of Claims 6 to 9 to coat wires, preferably as a single coat.

13. Use of the wire enamel according to one of Claims 6 to 9 as a topcoat for the coating of wires, preferably of copper wires coated with polyester and polyesterimide basecoats.

## Revendications

1. Solution de résine polyamide-imide, pouvant être préparée en faisant réagir
(a) des acides polycarboxyliques aromatiques et/ou leurs anhydrides avec
b1) des polyisocyanates aromatiques apparaissant lors de la préparation du 4,4'-diphénylméthane-diisocyanate, contenant un mélange de 4,4'-diphénylméthane-diisocyanate, ses isomères et homologues, ayant une fonctionnalité NCO calculée d'environ 2,1 à 2,7 par molécule
seuls ou
en mélange avec
b3) des composés de formule générale
A'-(NCO)₂ (VIII)
où A' = un groupe de formules générales IX à XIII 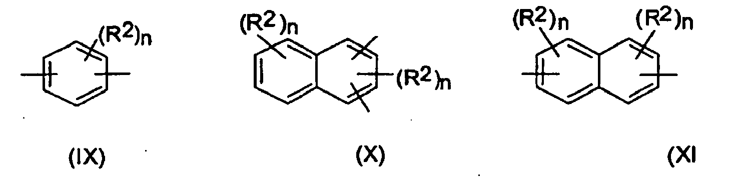 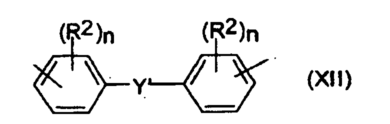 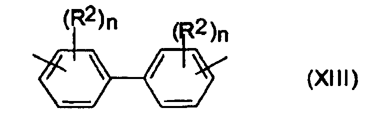 dans lesquelles Y' a la signification indiquée précédemment de Y et représente en outre le groupe 1,3,4-thiadiazol-2,5-diyle,
R² représente un groupe alkyle en C₁-C₄ ou phényle et
n = 0 ou un nombre entier allant de 1 à 4
dans du crésol, par réaction à des températures supérieures à 170 °C.

2. Solution de résine polyamide-imide selon la revendication 1, **caractérisée en ce que** le composant (a) contient
a1) des acides tricarboxyliques aromatiques de formule générale I et/ou leurs anhydrides de formule générale II 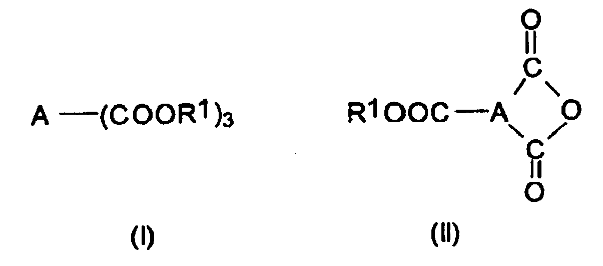 formules dans lesquelles
R = H et
A représente un groupe de formules générales III à VI 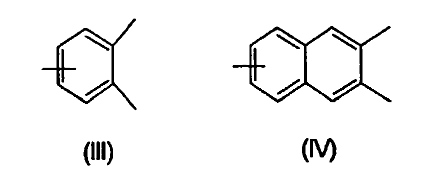 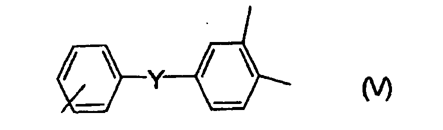 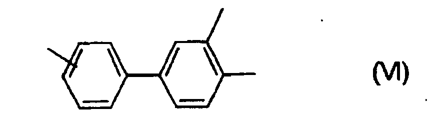 dans lesquelles Y = -CH₂-, -CO-, -SO₂-, -C(CH₃)₂-, -O- ou -S- ; ou
a2) des mélanges de ces composants a1) d'une part et d'acides tétracarboxyliques aromatiques a21) et/ou de leurs anhydrides a21) d'autre part ou
a3) des mélanges du composant a1), du mélange a2) avec des acides dicarboxyliques aromatiques a31) d'autre part.

3. Solution de résine polyamide-imide selon la revendication 2, **caractérisée en ce que** le composant a1) contient de l'acide trimellitique et/ou son anhydride, le composant a21) contient de l'acide benzophénonetétracarboxylique, de l'acide pyromellitique et/ou leurs anhydrides, le composant a31) contient de l'acide téréphtalique.

4. Solution de résine polyamide-imide selon l'une quelconque des revendication 1 à 3, **caractérisée en ce que** le composant b) contient en tant que diisocyanates b3) du phénylène-, toluylène-, naphtalène- ou xylylènediisocyanate ou du diphényléther-, diphénylsulfure-, diphénylsulfone- ou diphénylméthanediisocyanate, en particulier du 4,4'-diphénylméthanediisocyanate.

5. Utilisation des solutions de résine polyamideimide selon l'une quelconque des revendications 1 à 4, pour la préparation de vernis pour fils métalliques.

6. Vernis pour fils métalliques, contenant des solutions de résine polyamide-imide selon l'une quelconque des revendications 1 à 4.

7. Vernis pour fils métalliques selon la revendication 6, contenant des additifs et/ou des diluants.

8. Vernis pour fils métalliques selon la revendication 6 ou 7, contenant les solutions de résine polyamide-imide en une quantité telle qu'il en résulte une teneur en polyamide-imide de 10 à 50, de préférence de 15 à 45 % en poids, par rapport à la quantité totale du vernis pour fil métallique.

9. Vernis pour fils métalliques selon la revendication 8, contenant, par rapport à la quantité totale du vernis pour fil métallique,
de 10 à 50, de préférence de 15 à 45 % en poids, de polyamide-imide,
de 0,1 à 5,0, de préférence de 0,1 à 4,0 % en poids d'additifs,
de 0,0 à 5,0, de préférence de 0,0 à 3,0 % en poids de catalyseurs de réticulation,
de 10 à 90, de préférence de 20 à 80 % en poids de crésol,
de 0 à 40, de préférence de 5 à 35 % en poids de diluant.

10. Fil métallique verni, **caractérisé en ce qu'**il est revêtu d'un vernis pour fils métalliques selon l'une quelconque des revendications 6 à 9.

11. Procédé pour la fabrication d'un fil métallique verni selon la revendication 10, **caractérisé en ce que**
- on applique un vernis de fond, de préférence à base de polyester ou polyester-imide, sur un fil métallique de préférence en cuivre,
- on applique le vernis pour fils métalliques selon l'une quelconque des revendications 6 à 10 et
- ensuite on émaille au four.

12. Utilisation du vernis pour fils métalliques selon l'une quelconque des revendications 6 à 9, pour le revêtement de fils métalliques, de préférence en tant que vernis monocouche.

13. Utilisation du vernis pour fils métalliques selon l'une quelconque des revendications 6 à 9, en tant que vernis de finition pour le revêtement de fils métalliques, de préférence de fils de cuivre revêtus de vernis de fond à base de polyester et polyester-imide.
